**Europäisches Patentamt**

**European Patent Office**

**Office européen des brevets**

(19)

(11) Veröffentlichungsnummer: **0 311 638 B1**

(12) # EUROPÄISCHE PATENTSCHRIFT

(45) Veröffentlichungstag der Patentschrift:
21.08.91 Patentblatt 91/34

(51) Int. Cl.⁵: **C10B 39/02, F22B 1/04**

(21) Anmeldenummer: **87904384.2**

(22) Anmeldetag: **11.06.87**

(86) Internationale Anmeldenummer:
**PCT/EP87/00305**

(87) Internationale Veröffentlichungsnummer:
**WO 87/07631 17.12.87 Gazette 87/28**

(54) **VORRICHTUNG ZUR KOKSTROCKENKÜHLUNG.**

(30) Priorität: **12.06.86 DE 3619745**
**01.08.86 DE 3626120**

(43) Veröffentlichungstag der Anmeldung:
**19.04.89 Patentblatt 89/16**

(45) Bekanntmachung des Hinweises auf die
Patenterteilung:
**21.08.91 Patentblatt 91/34**

(84) Benannte Vertragsstaaten:
**AT BE FR GB IT NL**

(56) Entgegenhaltungen:
**EP-A- 0 071 804**
**DE-A- 3 013 351**
**DE-A- 3 013 722**
**DE-C- 492 943**
**FR-A- 2 445 363**
**GB-A- 2 127 429**

(73) Patentinhaber: **STILL OTTO GMBH**
**Christstrasse 9**
**W-4630 Bochum 1 (DE)**

(72) Erfinder: **LORENZ, Kurt**
**Habichtstrasse 65**
**W-4320 Hattingen (DE)**
Erfinder: **DUNGS, Horst**
**Am Düngelbruch 21**
**W-4690 Herne (DE)**

(74) Vertreter: **Dahlkamp, Heinrich-Leo, Dipl.-Ing.**
**c/o Still Otto GmbH Patentabteilung**
**Christstrasse 9 Postfach 10 18 50**
**W-4630 Bochum 1 (DE)**

## Beschreibung

Die Erfindung bezieht sich auf eine Vorrichtung zur Kokstrokkenkühlung gemäß Oberbegriff des Hauptanspruches.

Eine gattungsgemäße Vorrichtung ist aus der DE-C-3013722 bekannt, wonach der heiße Kammerkoks in einer geschlossenen Kühlkammer seine Wärme teils direkt an ein inertes Umwälzgas und teils indirekt über Kühlflächen an eine Kühlflüssigkeit abgibt. Die Kühlkammer ist dabei als rechteckiger Kasten ausgebildet und besitzt kreisrunde Öffnungen zum Einfüllen des heißen Kokses aus nicht näher beschriebenen Vorkammern. Die Kühlgaszuführungen sind dabei auf der einen kurzen Seite und die Abzüge für das heiße Kühlgas auf der gegenüberliegenden kurzen Querseite der Kühlkammer angeordnet. Bei Anordnung derartiger mehrerer kreisrunder Einfüllöffnungen und einseitiger Zu- und Abfuhr des Kühlgases ergeben sich in der Kühlkammer Bereiche mit unterschiedlicher Koksschüttdichte und unterschiedlichem Druckverlust für das Kühlgas, was Probleme für eine gleichmäßige Verteilung des Kühlgases auf alle Bereiche des Kühlschachtes mit sich bringen kann.

Aufgabe der Erfindung ist es, die Vorrichtung zur Kokstrockenschnittes derart zu verbessern, daß alle Bereiche der Kühlkammer gleichmäßig mit Kühlgas beaufschlagt und die Geschwindigkeiten beim Abzug der heißen Kühlgase aus der Koksschüttung weiter verringert werden.

Zur Lösung dieser Aufgabe sieht die Erfindung die im Kennzeichen des ersten Anspruches aufgeführten Merkmale vor.

Die Erfindung schlägt eine kompakte Einheit von Kühlkammer und Vorkammer vor, wobei beide Kammern einen rechteckigen Querschnitt haben und wobei der Querschnitt der Kühlkammer größer/gleich dem der Vorkammer ist. Bei gleichem Querschnitt können die Außenwände beider Kammern insbesondere etwa senkrecht übereinander angeordnet sein, wodurch eine gemeinsame Einspannung und Verankerung möglich wird. Die rechteckige Übergabeöffnung des Kokses zwischen Vorkammer und Kühlkammer erstreckt sich zumindest über deren gesamte Länge. Das bedeutet, daß insbesondere in Kombination mit den an den Längsseiten der Kühlkammer verlaufenden Abzugsleitungen bei beliebiger Länge der Kühlkammer eine gleichmäßig hohe Koksschüttung vorhanden ist, so daß auch eine gleichmaßige Verteilung der Kühlgasströme möglich ist. In Querrichtung der Kammer kann darüber hinaus durch einen langgestreckten dachförmigen Einbau der Koks in der Weise verteilt werden, daß statt des sonst vorhandenen einen Schüttkegels sich zwei Schüttkegel bilden. Dabei wird zur Vergleichmäßigung der Gasdurchlässigkeit der Koksschüttung in der Kühlkammer die Gleit- bzw. Rollrichtung der Kokskörner von zuerst von innen nach außen und anschließend von außen nach innen geändert. Es hat sich nämlich gezeigt, daß bei einem Schüttkegel die groberen Koksstüke am weitesten nach außen rollen, wodurch die Gasdurchlässigkeit an den äußeren Rändern des Schüttkegels größer wird als in der Mitte der Koksschüttung mit den durchschnittlich kleineren Koksstücken. Durch die Umkehrung der Rollrichtung der Kokskörner wird der schlechteren Gasdurchlässigkeit in der Mitte der Kammer entgegengewirkt.

Mit den erfindungsgemäß vorgeschlagenen Merkmalen kann das Kühlgas an allen Stellen der Kühlkammer in gleicher Menge die Koksschüttung durchströmen und damit wird auch der Koks gleichmäßig abgekühlt. Es gibt weder in der Mitte noch an den beiden Schmalseiten der Kühlkammer Unregelmäßigkeiten bei der Kühlgasverteilung.

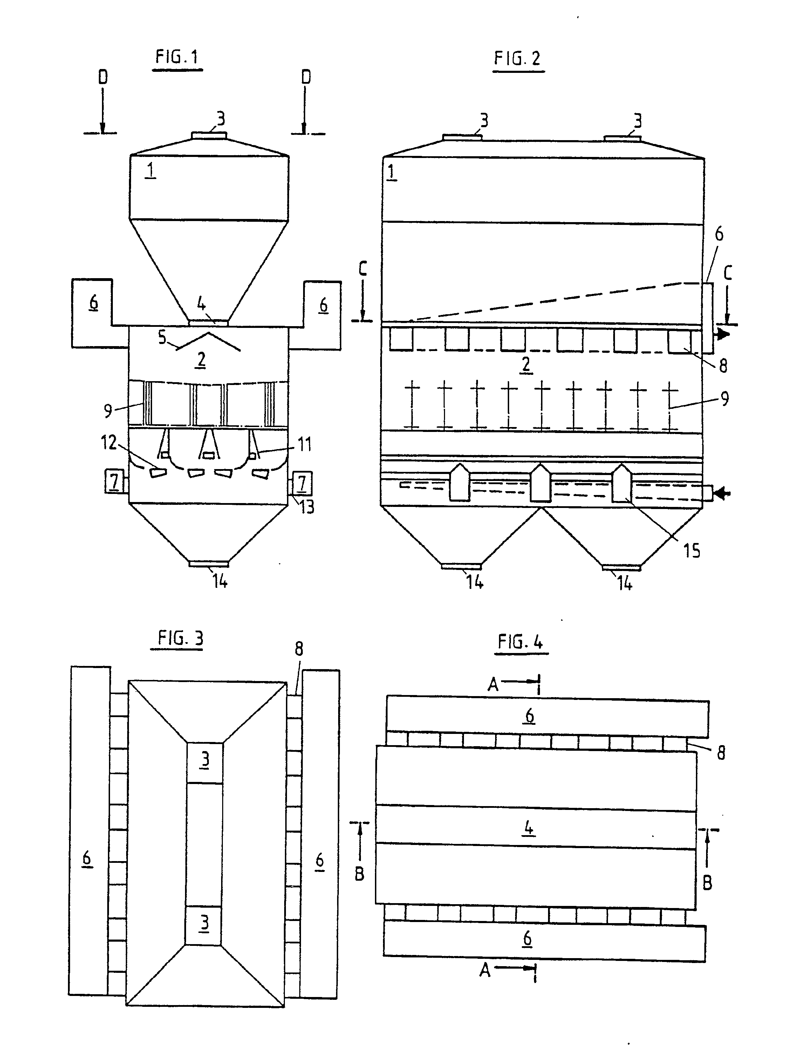

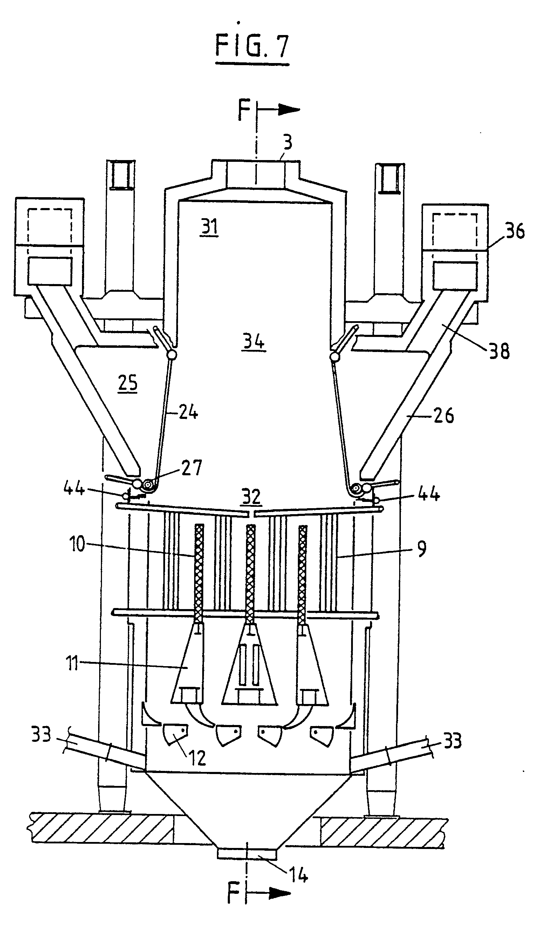

Der dachförmige Einbau kann gemäß Anspruch 12 an verschiedenen Stellen eingesetzt werden, wobei die Anordnung im verfahrbaren Überleittrichter oberhalb der Einfüllöffnung den Vorteil bietet, daß der Einbau nur während des kurzfristigen Einfüllens des heißen Kokses höheren Temperaturen ausgesetzt ist. Bei Anordnung in oder direkt unter der Einfüllöffnung oder, wie in Figur 1 dargestellt, unter der Übergabeöffnung ist es zweckmäßig, ihn an der Unterseite als Verdampfungsfläche, z.B. aus einer Rohr- oder Rohr-Steg-Rohr-Konstruktion, zu machen und an der Oberseite durch hitzebeständige Hartgußplatten oder hartkeramisches Material abzudecken. Dabei ist einerseits eine Kühlung der Tragkonstruktion des Einbaus möglich und andererseits können erhebliche Wärmemengen durch Strahlung direkt von dem heißen Koks an das Kühlmedium übertragen werden. Bei der Ausführung nach der Figur 7 kann insbesondere auf den dachförmigen Einbau im Bereich der Übergabeöffnung verzichtet werden, da sämtliche Außenwände der Vorkammer bis zur Übergabeöffnung hin senkrecht angeordnet sind (vgl. Anspruch 17) und es in diesem Bereich nicht zu einer Entmischung kommt.

In Hinblick auf eine Steigerung des Durchsatzes der Kühlkammern sieht die Erfindung vor, daß an den Längsseiten der Kühlkammer die Abzugsleitungen über mehrere einstellbare Abzugsöffnungen mit der Kühlkammer verbunden sind. Bei etwa gleicher Breite könnte die Kühlkammer dann beliebig verlängert werden, ohne daß Probleme beim Abzug der heißen Kühlgase auftreten.

Zur Vergrößerung der Austrittsquerschnitte und damit zur Reduzierung der Austrittsgeschwindigkeit des heißen Kühlgases aus der Koksschüttung schlägt die Erfindung weiterhin vor, daß zwischen der Übergabeöffnung und der Oberkante der Kühlkammer ein senkrechter oder nahezu senkrechter Kühlrohrvorhang aus parallelen, mit Abstand zueinander, senkrecht verlaufenden Kühlrohren angeordnet ist. Die Höhe des Kühlrohrvorhanges kann dabei etwa der Breite der Vorkammer entsprechen. Insbesondere beträgt sie ca. 3 bis 6

2

m. Die Kühlrohre erstrecken sich dabei über die gesamte Höhe dieses Kühlvorhanges und münden unten in die waagerecht verlaufende Kühlwasserzuführungsleitung und oben in die Dampfabzugsleitung. Es hat sich gezeigt, daß bei der erfindungsgemäßen, nahezu senkrechten bzw. unten nach außen geneigten Anordnung des Kühlvorhanges der von der Koksschüttung ausgeübte seitliche Druck nur sehr gering ist und daß von daher relativ große freie Spannweiten für die Kühlrohre genommen werden können. Die Erfindung schlägt insbesondere vor, daß der Kühlrohrvorhang unter einem Winkel von 5 bis 30°, vorzugsweise 5 bis 15°, gegenüber der Senkrechten nach unten hin erweitert ist. Bei einer derartigen Neigung des Kühlrohrvorhanges setzt sich der herabrutschende heiße Koks immer wieder von den Kühlrohren ab, so daß es zu keinem nennenswerten Verschleiß kommen kann.

Der Abstand der Kühlrohre voneinander bzw. die effektive freie Durchtrittsbreite für das heiße Kühlgas wird erfindungsgemäß auf 10 bis 60 mm, vorzugsweise 20 bis 30 mm, festgelegt je nach Stückgröße des Kokses. Es hat sich gezeigt, daß hierbei nur sehr geringe Mengen an Kokspartikeln von dem Kühlgas mitgerissen werden.

Zur Versteifung des Kühlrohrvorhanges wird erfindungsgemäß weiterhin vorgeschlagen, vor den Kühlrohren koksseitig rippenartige Profile, z.B. U- oder Doppel-T-Profile anzuordnen, die an den Gasdurchtritten parallele oder sich geringfügig nach außen erweiternde Durchtrittsöffnungen bilden. Auf diese Weise wird auch verhindert, daß sich Koksstücke zwischen den Kühlrohren verklemmen.

Bis auf die Feinststäube, die in dem nachgeschalteten Abhitzekessel und Zyklonen abgeschieden werden, werden alle mitgerissenen Kokspartikel und groberen Stücke in dem Beruhigungsraum abgeschieden und über die untere Staubaustragsschnecke ausgetragen. Das an den Enden der Schnecken am günstigsten kontinuierlich abgezogene heiße Material wird nach dem Vorschlag der Erfindung in Zwischenbunkern gesammelt und diskontinuierlich in den Staubsammeltrichter der ersten Stufe des Abhitzekessels geleitet und gemeinsam mit dem dort abgeschiedenen Material gekühlt und ausgetragen. Der im Staubsammeltrichter herrschende Unterdruck reicht dabei zur Ansaugung des Materials aus.

In ähnlicher Weise wie der Abzug des heißen Kühlgases kann auch die Zuführung des kalten Kühlgases an den beiden Längsseiten der Kühlkammer unterhalb der Koksaustragswippen über einstellbare Öffnungen erfolgen. Die Regelung der Gasmengen wird erfindungsgemäß dadurch begünstigt, daß die Zuführungsleitungen sich in Strömungsrichtung konisch verringern und die Abführungsleitungen sich konisch erweitern.

Zur Verringerung des Verschleißes an besonders kritischen Stellen, wie z.B. an der unteren Längskante der Übergabeöffnung der Vorkammer und dem unteren Rand des dachförmigen Einbaus, sieht die Erfindung vor, daß dort eine senkrechte Staukante aus hochfestem, hitzebeständigen Material angeordnet ist. Vor dieser Staukante bleibt dann jeweils eine gewisse Menge Koks liegen, die als Verschleißschicht dient und auf der der andere Koks abwärts gleitet. Die Staukante ist zweckmäßigerweise leicht auswechselbar, so daß sie im Rahmen der üblichen Wartungsintervalle erneuert werden kann. Die Verschleißfestigkeit kann dabei durch eine zusätzliche Kühlung, z.B. in Form von parallel angeordneten Kühlrohren, erhöht werden.

Bei der erfindungsgemäßen Form der Vorkammer mit der länglichen Übergabeöffnung und z.B. zwei oberen Einfüllöffnungen hat es sich gezeigt, daß diese Vorkammer ein relativ großes Speichervolumen aufnehmen kann. Erfindungsgemäß wird dabei vorgeschlagen, bereits den unteren Teil der Vorkammer, vorzugsweise das ein oder zwei Drittel, zusätzlich mit senkrechten, parallel zueinander verlaufenden, durch hitzebeständige Platten geschützten Kühlwänden zu versehen. In diesem Bereich der Vorkammer findet dabei bereits eine direkte Kühlung des Kokses statt, ohne daß umgewälzte Kühlgase den Koks berühren.

Schließlich hat es sich in Hinblick auf eine Vereinfachung der äußeren Verankerung der rechteckigen Kammern als günstig erwiesen, die inneren, in Kammerquerrichtung verlaufenden Kühlwände als Zuganker auszubilden. Vorkammer und die Kühlrohrvorhänge sind dabei zweckmäßig getrennt von der Kühlkammer abgestützt mit dazwischen angeordneten Kompensatoren. Darüber hinaus können die Abmessungen der Kühlwände derart auf die Einfüllöffnungen der Vorkammer und die Übergabeöffnung zur Kühlkammer abgestimmt werden, daß die Kühlwände ohne größeren Montageaufwand durch diese Öffnungen herausgezogen bzw. eingeführt werden können.

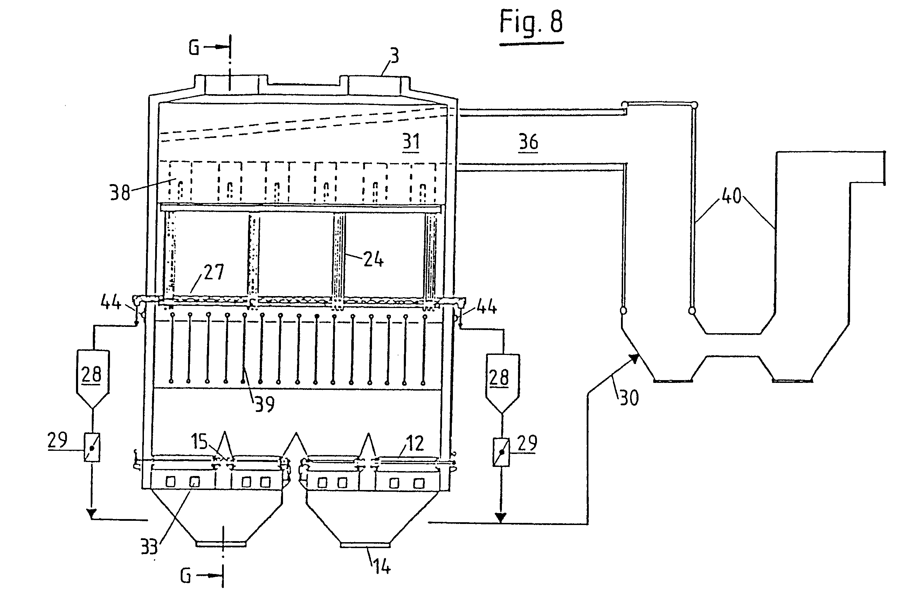

Die Erfindung wird anhand der beiliegenden Figuren 1 bis 10 beispielsweise näher erläutert.

Es zeigen

Figur 1    einen Schnitt nach der Linie A-A von Figur 4,
Figur 2    einen Schnitt nach der Linie B-B von Figur 4,
Figur 3    eine Draufsicht nach der Linie D-D von Figur 1,
Figur 4    einen Schnitt nach der Linie C-C von Figur 2,
Figur 5    einen vergrößerten Ausschnitt des dachförmigen Einbaus (5) zu Figur 1,
Figur 6    einen Schnitt nach der Linie E-E von Figur 5,
Figur 7    einen Schnitt nach der Linie G-G von Figur 8,

3

Figur 8     einen Schnitt nach der Linie F-F von Figur 7,

Figur 9     und Figur 10 einige Kühlrohre des Kühlrohrvorhanges im Querschnitt.

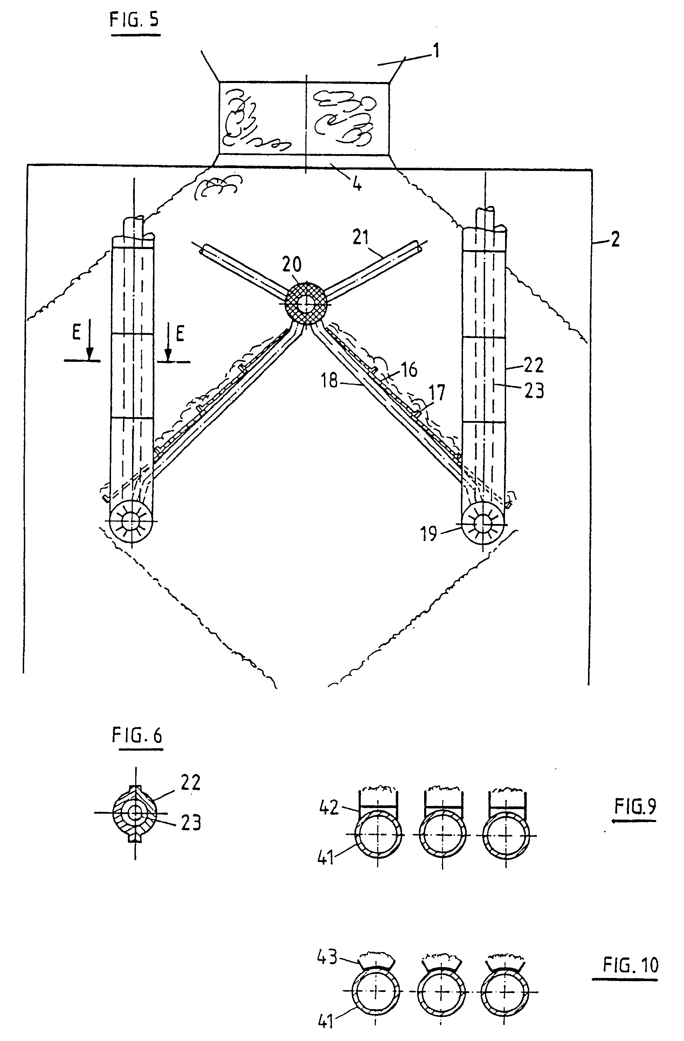

Bei den schematischen Darstellungen der Figuren 1-4 hat die Vorkammer (1) die gleiche Länge und die gleiche Breite wie die darunter angeordnete Kühlkammer (2). Bei der Ausführung nach Figur 7 ist die Kühlkammer (32) etwas breiter als die Vorkammer (31). Die Vorkammer besitzt zwei Kokseinfüllöffnungen (3). Das hat den Vorteil, daß bei Verwendung mehrerer Kokstransportkübel in kürzeren Abständen bzw. sogar gleichzeitig gefüllt werden kann. Unter der rechteckigen Übergabeöffnung (4) befindet sich ein dachförmiger Einbau (5), dessen Konstruktion und insbesondere Aufhängung aus der Figur 5 näher ersichtlich ist. Über Halterungen (23) ist der Einbau an der Decke der Kühlkammer (2) aufgehängt. Zum Schutz der Halterung (23) dienen Verkleidungsplatten (22).

Der eingefüllte Koks gleitet auf den Hartgußplatten (16) mit den unteren Staukanten (17) abwärts. Die Staukanten (17) sind dabei am unteren Ende jeder einzelnen Hartgußplatte (16) im rechten Winkel zur normalen Platte angeordnet. Die Unterkonstruktion des Einbausbesteht aus Kühlrohren (18), die über die Wasserzuführungsrohre (19) gespeist werden und am oberen Ende an den Sammler (20) angeschlossen sind, der wiederum über mehrere Dampfabzugsrohre (21) mit der Dampftrommel in Verbindung steht.

Das Kühlgas wird über die Kühlgaszuführungsleitungen (7) und die Zuleitungsstutzen (13)/(33) gleichmäßig verteilt in den Raum unterhalb der Koksaustragswippen (12) gegeben und strömt durch die einzelnen Kokszellen an den Kühlwänden (9)/(39) und den Stützwänden (10) entlang und wird oberhalb der Koksschüttung über die gleichmäßig verteilten Abzugsöffnungen (8)/(38) in die beiden Kühlgasabzugsleitungen (6)/36) gezogen. Entsprechend den größer und kleiner werdenden Mengen in den Kühlgasleitungen (6)/(36) und (7) sind deren Querschnitte in Strömungsrichtung verjüngt bzw. erweitert.

Der Koks wird gemäß Figur 1 nach Verlassen der Vorkammer (1) über den erfindungsgemäßen dachförmigen Einbau (5) zunächst in zwei Teilströme unterteilt, so daß unterhalb der beiden äußeren unteren Enden des Einbaus (5) zwei schräg abfallende Schüttungsböschungen entstehen. Unterhalb der Kühlwände (10) gleitet der Koks über die Koksschurren (11) und wird mit Hilfe der Koksaustragswippen in bestimmten Zeitfolgen in den darunter angeordneten freien Raum abgekippt und verläßt das System über die Koksauslässe (14).

In der Figur 7 ist im Vergleich zur Figur 1 der Auslauf der Vorkammer nicht mehr konisch verjüngt, sondern die Längswände sind senkrecht angeordnet. An diese senkrechten Längswände schließen sich unterhalb der Übergabeöffnung (34) die beiden Kühlrohrvorhänge (24) an. Das Problem der Entmischung des Kokses entsteht dabei im Bereich der Übergabeöffnung (34) nicht mehr, so daß dort auf den dachförmigen Einbau verzichtet werden kann.

Nach den Figuren 9 und 10 können die mit Abstand zueinander angeordneten einzelnen Kühlrohre (41) koksseitig entweder mit Doppel-T-Profilen (42) oder mit einfachen U-Eisen (43) verbunden sein. Zwischen den Kühlrohren (41) strömt das heiße Kühlgas nach außen und gelangt durch den Beruhigungsraum (25) über die einstellbaren Abzugsöffnungen (38) in die Gasabzugsleitungen (36). Die in dem Beruhigungsraum (25) sich absetzenden groberen Koksstäube rutschen auf der schrägen Außenwand (26) abwärts und werden an dem tiefsten Punkt mit Hilfe von Austragsschnecken (27) in waagerechter Richtung wegbefördert. Sie werden in den Zwischenbunkern (28) gesammelt und durch Öffnen von Absperrventilen (29) diskontinuierlich über Staubtransportleitungen (30) in den Staubsammeltrichter der ersten Stufe des Abhitzekessels (40) gegeben.

Bezugszeichenliste

| | |
|---|---|
| (1)/(31) | Vorkammer |
| (2)/(32) | Kühlkammer |
| (3) | Kokseinfüllöffnung |
| (4)/(34) | Übergabeöffnung |
| (5) | dachförmiger Einbau |
| (6)/(36) | Kühlgasabzugsleitung |
| (7) | Kühlgaszuführungsleitung |
| (8)/(38) | Abzugsöffnung |
| (9)/(39) | Kühlwände |
| (10) | Stützwände |
| (11) | Koksschurren |
| (12) | Koksaustragswippen |
| (13)/(33) | Zuleitungsstutzen |
| (14) | Koksauslaß |
| (15) | Traggehäuse mit Lagerungen und Antrieben für (12) |
| (16) | Hartgußplatten |
| (17) | Staukante an (5) |
| (18) | Kühlrohre |
| (19) | Wasserzuführungsrohre |
| (20) | Sammler |
| (21) | Dampfabzugsrohre |
| (22) | Verkleidungsplatten |
| (23) | Halterung für (5) |
| (24) | Kühlrohrvorhang |
| (25) | Beruhigungsraum |
| (26) | schräge Außenwand von (25) |
| (27) | Staubaustragsschnecken |
| (28) | Zwischenbunker |
| (29) | Absperrventil |
| (30) | Staubtransportleitung |
| (40) | zweistufiger Abhitzekessel |
| (41) | Kühlrohre |
| (42) | Doppel-T-Träger |
| (43) | U-Eisen |
| (44) | Kompensatoren |

## Patentansprüche

1. Vorrichtung zur Kokstrockenkühlung, bestehend aus einer oberen Vorkammer (1)/(31) mit ein oder mehreren Einfüllöffnungen (3) für den heißen Kammerkoks und einer Übergabeöffnung (4)/(34) **zur Beschickung** einer darunter angeordneten Kühlkammer (2)/(32) mit zugeordneten Koksaustragseinrichtungen (12) und Kühlgaszuführungen (7)/(37) im unteren Bereich und Kühlgasabzugseinrichtungen (6)/(36) am oberen Ende der Kühlkammer (2)/(32), die **dadurch gekennzeichnet** ist, daß die Kühlkammer (2)/(32) und die Vorkammer (1)/(31) beide einen im waagerechten Schnitt rechteckigen Querschnitt haben, wobei der Querschnitt der Kühlkammer (2)/(32) größer/gleich dem der Vorkammer (1)/(31) ist, und die Übergabeöffnung (4)/(34) als rechteckige, sich zumindest über die gesamte Länge der Kühlkammer (2)/(32) bzw. Vorkammer (1)/(31) erstreckende Öffnung ausgebildet ist und am oberen Ende der Kühlkammer (2)/(32) die Abzugsleitungen (6)/(36) für das Kühlgas seitlich auf beiden Seiten über der gesamten Länge angeordnet sind.

2. Vorrichtung nach Anspruch 1, **dadurch gekennzeichnet,** daß die Abzugsleitungen (6)/(36) an beiden Seiten über mehrere einstellbare Abzugsöffnungen (8)/(38) mit der Kühlkammer (2)/(32) verbunden sind.

3. Vorrichtung nach Anspruch 1, **dadurch gekennzeichnet,** daß zwischen der Übergabeöffnung (4)/(34) an der Unterkante der Vorkammer (1)/(31) und der Oberkante der Kühlkammer (2)/(32) ein senkrechter oder nahezu senkrechter Kühlrohrvorhang (24) aus parallelen, mit Abstand zueinander, senkrecht verlaufenden Kühlrohren (41) angeordnet ist.

4. Vorrichtung nach Anspruch 3, **dadurch gekennzeichnet,** daß die Höhe des Kühlrohrvorhanges (24) ca. 3 bis 6 m beträgt.

5. Vorrichtung nach Anspruch 3 oder Anspruch 4, **dadurch gekennzeichnet,** daß der Abstand zwischen den Kühlrohren (41) des Kühlrohrvorhanges (24) bzw. die freie Durchtrittsbreite für das heiße Kühlgas 10 bis 60 mm, vorzugsweise 20 bis 30 mm, beträgt.

6. Vorrichtung nach einem der Ansprüche 3 bis 5, **dadurch gekennzeichnet,** daß der Kühlrohrvorhang (24) gegenüber der Senkrechten unter einem Winkel von 5 bis 30°, vorzugsweise 5 bis 15°, nach unten hin erweitert ist.

7. Vorrichtung nach einem oder mehreren der Ansprüche 2 bis 6, **dadurch gekennzeichnet,** daß außerhalb des Kühlrohrvorhanges (24) noch vor den Abzugsöffnungen (8)/(38) bzw. den Abzugsleitungen (6)/(36) ein Beruhigungsraum (25) zur Abscheidung von groberem Koksstaub angeordnet ist mit einer äußeren, schrägen Außenwand (26), auf der der Koksstaub zur Mitte hin abwärts rutschen kann und mit einer in der unteren Spitze des Beruhigungsraumes (25) in Kühlkammerlängrichtung verlaufenden Staubaustragsschnecke (27).

8. Vorrichtung nach Anspruch 7, **dadurch gekennzeichnet,** daß zumindest an den äußeren Enden der Staubaustragsschnecke (27) sich Staubabzüge befinden, die über Zwischenbunker (28) und Staubtransportleitungen (30) mit dem Staubsammeltrichter der ersten Stufe des Abhitzekessels (40) verbunden sind.

9. Vorrichtung nach einem oder mehreren der vorhergehenden Ansprüche 1 bis 8, **dadurch gekennzeichnet,** daß regelbare Zuleitungsstutzen (13)/ (33) für das Kühlgas an den beiden Längsseiten der Kühlkammer unterhalb der Koksaustragswippen (12) angeordnet sind.

10. Vorrichtung nach einem oder mehreren der vorhergehenden Ansprüche 1 bis 9, **dadurch gekennzeichnet,** daß sich die Kühlgasabführungsleitungen (6)/(36) in Strömungsrichtung konisch erweitern.

11. Vorrichtung nach einem oder mehreren der vorhergehenden Ansprüche 1 bis 10, **dadurch gekennzeichnet,** daß sich die Kühlgaszuführungsleitungen (7) in Strömungsrichtung des Gases konisch verjüngen.

12. Vorrichtung nach einem oder mehreren der vorhergehenden Ansprüche 1 bis 11, **dadurch gekennzeichnet,** daß in dem verfahrbaren Überleittrichter oberhalb der Einfüllöffnung (3) und/oder in oder unterhalb der Einfüllöffnung (3) und/oder unterhalb der Übergabeöffnung (4)/(34) sich über die gesamte Länge ein dachförmiger Einbau (5) zur Verteilung des Kokses zu den Längswänden der Kühlkammer (2)/(32) hin erstreckt.

13. Vorrichtung nach Anspruch 12, **dadurch gekennzeichnet,** daß der dachförmige Einbau (5) als Verdampfungsfläche aus einer Rohr- oder Rohr-Steg-Rohr-Konstruktion (18) besteht und an seiner Oberseite durch hitzebeständige Hartgußplatten (16) oder hartkeramisches Material abgedeckt ist.

14. Vorrichtung nach Anspruch 12 oder 13, **dadurch gekennzeichnet,** daß die unteren Längskanten der Übergabeöffnung (4)/(34) der Vorkammer (1)/(31) und/oder der untere Rand des dachförmigen Einbaus (5) bzw. jeder Hartgußplatte (16) mit einer senkrechten Staukante (17) aus hochfestem, hitzebeständigen Material bestehen.

15. Vorrichtung nach Anspruch 14, **dadurch gekennzeichnet,** daß die hitzebeständigen Staukanten (17) zusätzlich mit einer Kühlung versehen sind.

16. Vorrichtung nach einem oder mehreren der vorhergehenden Ansprüche 1 bis 15, **dadurch gekennzeichnet,** daß im unteren Teil, vorzugsweise in einem oder zwei Dritteln, der Vorkammer (1)/(31) zusätzlich senkrechte, parallel zueinander verlaufende, durch hitzebeständige Platten geschützte Kühlwände angeordnet sind.

17. Vorrichtung nach einem oder mehreren der vorhergehenden Ansprüche 1 oder 16, **dadurch gekennzeichnet,** daß sämtliche Außenwände der Vorkammer (31) bis zur Übergabeöffnung (34) hinunter senkrecht oder unten leicht nach außen geneigt angeordnet sind und die Kühlkammer (32) etwas breiter ist als die Vorkammer (1).

18. Vorrichtung nach einem oder mehreren der Ansprüche 3 bis 6, **dadurch gekennzeichnet,** daß vor den Kühlrohren (41) koksseitig rippenartig Profile, z.B. U- oder Doppel-T-Profile, angeordnet sind, die an den Gasdurchtritten parallele oder sich geringfügig nach außen erweiternden Durchtrittsöffnungen bilden.

19. Vorrichtung nach einem oder mehreren der vorhergehenden Ansprüche, **dadurch gekennzeichnet,** daß Vorkammer (1)/(31) und die Kühlrohrvorhänge (24) getrennt von der Kühlkammer (2)/(32) abgestützt und dazwischen Kompensatoren (44) angeordnet sind.

20. Vorrichtung nach Anspruch 1 oder 16, **dadurch gekennzeichnet,** daß die inneren Kühlwände (9)/(39) in der Kühlkammer (2)/(32) und/oder der Vorkammer (1)/(31) in Kammerquerrichtung verlaufen und als Zuganker für die äußeren Längswände der Kühlkammer und/oder der Vorkammer ausgebildet sind.

21. Vorrichtung nach Anspruch 1 oder 16 oder 20, **dadurch gekennzeichnet,** daß die inneren Kühlwände (9)/(39) durch die Übergabeöffnung (4)/(34) und/oder die obere Kokseinfüllöffnung (3) ohne Öffnen der Außenwände leicht auswechselbar sind.

## Claims

1. Apparatus for the dry cooling of coke consisting of an upper prechamber (1)/(31) with one or several charging openings (3) for the hot coke from the oven chambers and a transfer opening (4)/(34) through which coke is admitted to a cooling chamber (2)/(32) arranged beneath with pertinent coke discharge units (12) and cooling gas supply lines (7)/(37) in the lower area and cooling gas discharge systems (6)/(36) at the upper end of the cooling chamber (2)/(32) **characterized in that** both the cooling chamber (2)/(32) and the prechamber (1)/(31) have a rectangular cross section as viewed in the horizontal section with the cross section of the cooling chamber (2)/(32) being greater than/equal to that of the prechamber (1)/(31) and the transfer opening (4)/(34) being designed as a rectangular aperture extending at least over the entire length of the cooling chamber (2)/(32) or prechamber (1)/(31) and at the upper end of the cooling chamber (2)/(32) the discharge lines (6)/(36) evacuating cooling gas extend laterally over the entire length on both sides.

2. Apparatus according to Claim 1 **characterized in that** the discharge lines (6)/(36) on both sides are connected with the cooling chamber (2)/(32) via several adjustable discharge openings (8)/(38).

3. Apparatus according to Claim 1 **characterized in that** between the transfer opening (4)/(34) at the bottom edge of prechamber (1)/(31) and top edge of cooling chamber (2)/(32) a vertical or almost vertical cooling tube curtain (24) is arranged which consists of parallel interspaced cooling tubes (41) of vertical arrangement.

4. Apparatus according to Claim 3 **characterized in that** the height of the cooling tube curtain (24) amounts to approx. 3 to 6 m.

5. Apparatus according to Claim 3 or Claim 4 **characterized in that** the distance between the cooling tubes (41) of the cooling tube curtain (24) and thus the free passage width for the hot cooling gas ranges between 10 and 60 mm and is preferably 20 to 30 mm.

6. Apparatus according to one of the Claims 3 to 5 **characterized in that** the cooling tube curtain (24) enlarges towards the bottom by an angle ranging between 5 and 30°, preferably 5 and 15°, with respect to the vertical.

7. Apparatus according to one or several of the Claims 2 to 6 **characterized in that** external to the cooling tube curtain (24) and still ahead of the discharge openings (8)/(38) and discharge lines (6)/(36) a settling space (25) for the separation of coarser coke dust has been arranged with one inclined outer wall (26) on which the coke dust is allowed to slide down towards the middle and with a dust discharge screw feeder (27) located in the lower vertex of the settling space (25) extending in the longitudinal direction of the cooling chamber.

8. Apparatus according to Claim 7 **characterized in that** at least at the extreme ends of the dust discharge screw feeder (27) dust offtakes are arranged which are connected with the dust collecting hopper of the first stage of the waste heat boiler (40) via intermediate bunker (28) and dust conveying lines (30).

9. Apparatus according to one or several of the preceding Claims 1 to 8 **characterized in that** adjustable feed connections (13/(33) for the cooling gas are arranged at the two longitudinal sides of the cooling chamber below swing-type coke discharge units (12).

10. Apparatus according to one or several of the preceding Claims 1 to 9 **characterized in that** the cooling gas discharge lines (6)/(36) enlarge conically in the direction of flow.

11. Apparatus according to one or several of the preceding Claims 1 to 10 **characterized in that** the cooling gas supply lines (7) reduce conically in the direction of the gas flow.

12. Apparatus according to one or several of the preceding Claims 1 to 11 **characterized in that** a roof-like internal structure (5) intended to distribute the coke towards the longitudinal walls of cooling chamber (2)/(32) extends over the entire length in the traversable transfer hopper above the coke charging opening (3) and/or in or below the coke charging opening (3) and/or below the transfer opening (4)/(34).

13. Apparatus according to Claim 12 **characterized in that** the roof-like internal structure (5) is designed as evaporation surface consisting of a tubular or tube-web-tube construction (18) covered on its top side by heat resistant chilled cast-iron plates (16) or hard ceramic material.

14. Apparatus according to Claims 12 or 13 **characterized in that** the bottom longitudinal edges of the transfer opening (4)/(34) of the prechamber (1)/(31) and/or the lower rim of the roof-like internal structure (5) and of each chilled cast-iron plate (16) are provided with a vertical retaining edge (17) consisting of high-strength heat-resistant material.

15. Apparatus according to Claim 14 **characterized in that** the heat-resistant retaining edges (17) are provided with an additional cooling system.

16. Apparatus according to one or several of the preceding Claims 1 to 15 **characterized in that** in the lower part, preferably in one or two thirds, of the prechamber (1)/(31) additional vertical cooling walls are arranged parallel to each other and protected by means of heat-resistant plates.

17. Apparatus according to one or several of the preceding Claims 1 to 16 **characterized in that** all outer walls of the prechamber (31) extending down to the transfer opening (34) are vertical or slightly inclined outwardly and the cooling chamber (32) is slightly wider than the prechamber (1).

18. Apparatus according to one or several of Claims 3 to 6 **characterized in that** in front of the cooling tubes (41) on the side in contact with coke rib-like profiles, for instance channels or H-beams, are arranged which at the gas passage locations form passage openings of parallel configuration or slightly enlarging towards the outside.

19. Apparatus according to one or several of the preceding Claims **characterized in that** the prechamber (1)/(31) and the cooling tube curtains (24) are supported separately from the cooling chamber (2)/(32) with compensators being arranged in between.

20. Apparatus according to Claim 1 or 16 **characterized in that** the inner cooling walls (9)/(39) in the cooling chamber (2)/(32) and/or prechamber (1)/(31) run in the transverse direction of the chamber and are designed as the elements for the external longitudinal walls of the cooling chamber and/or the prechamber.

21. Apparatus according to Claim 1 or 16 or 20 **characterized in that** the inner cooling walls (9)/(39) are easily replaceable through the transfer opening (4)/(34) and/or the upper coke charging opening (3) without having to open the outer walls.

## Revendications

1. Dispositif pour le refroidissement à sec du coke se composant d'une cellule primaire (1)/(31) avec un ou plusieurs orifices de remplissage (3) pour le coke chaud de la cellule et un orifice de transfert (4)/(34) pour le chargement d'une cellule de refroidissement (2)/(32) ordonnée au-dessous avec des bascules de déversement du coke (12) adjointes et des conduites d'amenées du gaz de refroidissement (7)/(37) dans la zone inférieure et des dispositifs d'évacuation du gaz de refroidissement (6)/(36) à l'extrémité supérieure de la cellule de refroidissement (2)/(32) **caractérisé par le fait que** la cellule de refroidissement (2)/(32) et la cellule primaire (1)/(31) ont toutes les deux une section rectangulaire en coupe horizontale, la section de la cellule de refroidissement (2)/(32) étant plus grande que ou égale à celle de la cellule primaire (1)/(31) et que l'orifice de transfert (4)/(34) ayant la forme d'une ouverture rectangulaire s'étend au moins sur toute la longueur de la cellule de refroidissement (2)/(32) et de la cellule primaire (1)/(31) et qu'à l'extrémité supérieure de la cellule de refroidissement (2)/(32) les conduites d'évacuation (6)/(36) pour le gaz de refroidissement sont disposéés latéralement des deux côtés sur toute la longueur.

2. Dispositif selon la revendication 1 **caractérisé par le fait que** les conduites d'évacuation (6)/(36) sont reliées à la cellule de refroidissement (2)/(32) des deux côtés par plusieurs orifices d'évacuation (8)/(38).

3. Dispositif selon la revendication 1 **caractérisé par le fait qu'**un rideau de tubes de refroidissement (24) vertical ou quasi vertical se composant de tubes de refroidissement (41) parallèles espacés les uns des autres et ordonnés verticalement est disposé entre les orifices de transfert (4)/(34) au bord inférieur de la cellule de refroidissement (2)/(32).

4. Dispositif selon la revendication 3 **caractérisé par le fait que** la hauteur du rideau de tubes de refroidissement (24) a une hauteur d'environ 3 à 6 m.

5. Dispositif selon la revendication 3 ou 4 **caractérisé par le fait que** l'écart entre les tubes de refroidissement (41) du rideau de tubes de refroidissement (24) ou la largeur libre de passage des gaz pour le gaz de refroidissement chaud est de 10 à 60 mm et de préférence de 20 à 30 mm.

6. Dispositif selon l'une des revendications 3 à 5 **caractérisé par le fait que** le rideau de tubes de refroidissement (24) est élargi vers le bas sous un angle de 5 à 30° et de préférence 5 à 15° par rapport à la verticale.

7. Dispositif selon l'une ou plusieurs des revendications 2 à 6 **caractérisé par le fait qu**'à l'extérieur du rideau de tubes de refroidissement (24) encore devant les orifices d'évacuation (8)/(38) et les conduites d'évacuation (6)/(36) est ordonné un espace de calmage (25) pour la séparation de grosses poussières de coke avec une paroi extérieure (26) inclinée sur laquelle la poussière de charbon peut descendre vers le milieu et avec une vis sans fin d'extraction du coke (27) disposée dans la pointe inférieure de l'espace de calmage (25) dans le sens longitudinal de la cellule de refroidissement.

8. Dispositif selon la revendication 7 **caractérisé par le fait qu'**il y a des dispositifs d'évacuation de poussière au moins aux deux extrémités extérieures de la vis sans fin d'extraction des poussières (27) lesquels sont reliés à la trémie collectrice de poussières du premier étage de la chaudière de récupération (40) par le silo intermédiaire et les conduites de transport de poussières (30).

9. Dispositif selon l'une ou plusieurs des revendications précédentes 1 à 8 **caractérisé par le fait que** des tubulures d'amenée réglables (13)/(33) pour le gaz de refroidissement sont disposés sur les deux côtés longitudinaux de la cellule de refroidissement au-dessous des bascules de déversement du coke (12).

10. Dispositif selon une ou plusieurs des revendications précédentes 1 à 9 **caractérisé par le fait que** les conduites d'évacuation du gaz de refroidissement (6)/(36) s'élargissent coniquement dans le sens du courant.

11. Dispositif selon une ou plusieurs des revendications précédentes 1 à 10 **caractérisé par le fait que** les conduites d'amenée de gaz de refroidissement (7) se rétrécissent coniquement dans le sens du courant du gaz.

12. Dispositif selon une ou plusieurs des revendications précédentes 1 à 11 **caractérisé par le fait que** dans les trémies de transfert déplaçables au-dessus de l'orifice de remplissage (3) et/ou dans ou au-dessous de l'orifice de remplissage (3) et/ou au-dessous de l'orifice de transfert (4)/(34) une chicane (5) en forme de toit pour la répartition du coke vers les grands côtés de la cellule de refroidissement (2)/(32) s'étend sur toute la longueur.

13. Dispositif selon la revendication 12 **caractérisé par le fait que** la chicane (5) en forme de toit est constituée en tant que surface d'évaporation par une construction tubulaire ou par une construction de tubes et de traverses et est couverte sur sa face supérieure par des plaques de fonte trempée (16) résistantes à la chaleur ou du matériau en céramique dure.

14. Dispositif selon la revendication 12 ou 13 **caractérisé par le fait que** que les arêtes longitudinales inférieures de l'orifice de transfert (4)/(34) de la cellule primaire (1)/(31 et/ou le bord inférieur de la chicane (5) en forme de toit et de chaque plaque de fonte trempée (16) avec une arête de retenue (17) verticale sont composés d'un matériau à haute résistance et résistant à la chaleur

15. Dispositif selon la revendication 14 **caractérisé par le fait que** les arêtes de retenue (17) résistantes à la chaleur sont équipées en plus d'un dispositif de refroidissement.

16. Dispositif selon l'une ou plusieurs des revendications précédentes 1 à 15 **caractérisé par le fait que** dans la partie inférieure, et de préférence dans ou un deux tiers, de la cellule primaire (1)/(31) sont disposées en plus des parois de refroidissement parallèles entre elles et protégées par des plaques résistantes à la chaleur.

17. Dispositif selon l'une ou plusieurs des revendications précédentes 1 à 16 **caractérisé par le fait que** jusqu'à l'orifice de transfert (34) toutes les parois extérieures de la cellule primaire (31) sont disposées verticalement ou légèrement inclinées en bas vers l'extérieur et que la cellule de refroidissement (32) est un peu plus large que la cellule primaire (1).

18. Dispositif selon l'une ou plusieurs des revendications 3 à 6 **caractérisé par le fait que** devant les tubes de refroidissement (41) sont ordonnés des profilés nervurés du côté coke, des profilés en U ou en double T par exemple formant aux passages du gaz des orifices de passage parallèles ou s'élargissant légèrement vers l'extérieur.

19. Dispositif selon l'une ou plusieurs des revendications précédentes **caractérisé par le fait que** la cellule primaire (1)/(31) et les rideaux de tubes de refroidissement (24) sont supportés séparément par la cellule de refroidissement (2)/(32) et que des compensateurs (44) sont aménagés entre.

20. Dispositif selon la revendication 1 ou 16 **caractérisé par le fait que** les parois de refroidissement intérieures (9)/(39) passent dans la cellule de refroidissement (2)/(32) et/ou dans la cellule primaire (1)/(31) dans le sens transversal de la cellule et sont exécutées comme tirants d'ancrage pour les grands côtés extérieurs de la cellule de refroidissement et/ou de la cellule primaire.

21. Dispositif selon la revendication 1, 16 ou 20 **caractérisé par le fait que** les parois de refroidissement intérieures (9)/(39) sont faciles à remplacer par l'orifice de transfert (4)/(34) et/ou l'orifice de remplissage (3) sans ouvrir les parois extérieures.

FIG.1

FIG.2

FIG.3

FIG.4

FIG. 5

FIG. 6

FIG. 9

FIG. 10

11

# FIG. 7

## Fig. 8

EP 0 311 638 B1